(19) **Europäisches Patentamt / European Patent Office / Office européen des brevets**

(11) **EP 2 033 380 B1**

(12) # FASCICULE DE BREVET EUROPEEN

(45) Date de publication et mention de la délivrance du brevet:
**19.08.2015 Bulletin 2015/34**

(21) Numéro de dépôt: **07766101.5**

(22) Date de dépôt: **25.05.2007**

(51) Int Cl.:
***H04L 12/801*** *(2013.01)*

(86) Numéro de dépôt international:
**PCT/FR2007/051331**

(87) Numéro de publication internationale:
**WO 2007/147990 (27.12.2007 Gazette 2007/52)**

(54) **PROCEDE DE ROUTAGE DE LIENS VIRTUELS DANS UN RESEAU A COMMUTATION DE TRAMES A DETERMINISME GARANTI**

VERFAHREN ZUM ROUTEN VIRTUELLER VERBINDUNGEN IN EINEM FRAME-SWITCHING-NETZ MIT GARANTIERTEM DETERMINISMUS

METHOD OF ROUTING VIRTUAL LINKS IN A FRAME-SWITCHING NETWORK WITH GUARANTEED DETERMINISM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.06.2006 FR 0652616**

(43) Date de publication de la demande:
**11.03.2009 Bulletin 2009/11**

(73) Titulaire: **AIRBUS OPERATIONS**
**31060 Toulouse (FR)**

(72) Inventeurs:
• **ANDREOLETTI, Rémi**
**F-50460 Urville-Nacqueville (FR)**
• **MINOT, Frédéric**
**F-31810 Venerque (FR)**

(74) Mandataire: **Ilgart, Jean-Christophe et al**
**BREVALEX**
**95, rue d'Amsterdam**
**75378 Paris Cedex 8 (FR)**

(56) Documents cités:
EP-A2- 0 798 942   WO-A2-02/093999
FR-A1- 2 832 011   US-A1- 2003 043 756
US-B1- 6 529 958   US-B1- 6 584 093

• **GARCIA-LUNA-ACEVES J J ED - INSTITUTE OF ELECTRICAL AND ELECTRONICS ENGINEERS: "Distributed routing with labeled distances" ONE WORLD THROUGH COMMUNICATIONS. FLORENCE, MAY 4 - 8, 1992, PROCEEDINGS OF THE CONFERENCE ON COMPUTER COMMUNICATIONS (INFOCOM), NEW YORK, IEEE, US, vol. VOL. 2 CONF. 11, 4 mai 1992 (1992-05-04), pages 633-643, XP010062193 ISBN: 0-7803-0602-3**
• **GARCIA-LUNA-ACEVES J J ED - INSTITUTE OF ELECTRICAL AND ELECTRONICS ENGINEERS: "LIBRA: a distributed routing algorithm for large internets" COMMUNICATION FOR GLOBAL USERS. INCLUDING A COMMUNICATIONS THEORY MINI CONFERENCE. ORLANDO, DEC. 6 - 9, 1992, PROCEEDINGS OF THE GLOBAL TELECOMMUNICATIONS CONFERENCE (GLOBECOM), NEW YORK, IEEE, US, vol. VOL. 1, 6 décembre 1992 (1992-12-06), pages 1465-1471, XP010062445 ISBN: 0-7803-0608-2**
• **GARCIA-LUNES-ACEVES J J: "LOOP-FREE ROUTING USING DIFFUSING COMPUTATIONS" IEEE / ACM TRANSACTIONS ON NETWORKING, IEEE / ACM, NEW YORK, NY, US, vol. 1, no. 1, 1 février 1993 (1993-02-01), pages 130-141, XP000362256 ISSN: 1063-6692**

EP 2 033 380 B1

**Description**

**DOMAINE TECHNIQUE**

La présente invention concerne le domaine du routage dans un réseau à commutation de trames et plus particulièrement dans un réseau AFDX.

**ÉTAT DE LA TECHNIQUE ANTÉRIEURE**

Les réseaux Ethernet sont les plus connus des réseaux locaux. Ils peuvent fonctionner sous deux modes distincts, compatibles entre eux : un mode dit partagé, dans lequel un même support physique est partagé entre les terminaux, avec accès aléatoire et détection de collisions entre trames, et un mode dit commuté, dans lequel les terminaux s'échangent des trames à travers des liaisons virtuelles, garantissant ainsi l'absence de collisions.

Dans un réseau Ethernet commuté, chaque terminal, source ou destinataire, est relié individuellement à un commutateur de trames et les commutateurs sont reliés entre eux par des liaisons physiques. Plus précisément, chaque commutateur possède une pluralité de ports connectés aux ports d'autres commutateurs ou des coupleurs de terminaux. Une liaison virtuelle entre un terminal source et un terminal destinataire est définie comme un chemin orienté à travers le réseau, emprunté par les trames du terminal source à destination du terminal destinataire. De manière équivalente, une liaison virtuelle est définie par la liste ordonnée des commutateurs que ces trames traversent. Pour chaque commutateur traversé, la commutation de trames est réalisée à partir de l'adresse du destinataire, au moyen d'une table de commutation préétablie. Cette table de commutation est très simple puisqu'elle indique en fonction du port d'entrée du commutateur et de l'adresse de destination de la trame, le port de sortie correspondant. Nous nous intéresserons par la suite à un réseau à commutation de trames dont les tables de commutation sont prédéfinies et désignerons par la suite « lien virtuel » une connexion de bout en bout de niveau 2 dans un tel réseau, par exemple une liaison virtuelle dans un réseau Ethernet

Un exemple de l'état de l'art se trouve dans le document US20037043756.

Il est possible d'obtenir une garantie de service pour un lien virtuel. Cependant, étant donné que les commutateurs ne peuvent supporter qu'un débit maximal donné, cette garantie de service impose des contraintes sur le routage des liens. Le réseau AFDX *(Avionics Full Duplex Switched Ethernet),* développé pour les besoins de l'aéronautique, est un exemple de réseau Ethernet commuté dans lequel il est possible d'affecter une bande passante par lien virtuel. Plus précisément, à chaque lien virtuel est associé un intervalle minimal entre trames ainsi qu'une taille maximale de trame. De surcroît, un temps maximal d'acheminement des trames, ou borne de latence, est garanti pour chaque lien virtuel.

On trouvera une description détaillée du réseau AFDX dans le document intitulé « AFDX protocol tutorial » disponible sur le site www.condoreng.com ainsi que dans la demande de brevet FR-A-2832011 déposée au nom de la demanderesse. Ses principales caractéristiques seront simplement rappelées ci-après.

Comme déjà mentionné, le réseau AFDX est basé sur un réseau Ethernet commuté. Il est en outre de type full-duplex, chaque terminal pouvant simultanément émettre et recevoir des trames sur des liens virtuels distincts. Le réseau AFDX est aussi déterministe, au sens où les liens virtuels ont des caractéristiques garanties en termes de borne de latence, de ségrégation physique de flux, de bande passante et de débit. Chaque lien virtuel dispose pour ce faire d'un chemin réservé de bout en bout, d'une fragmentation temporelle en intervalles de transmission (dénommés BAG pour *Bandwidth Allocation Gap)* et d'une taille de trame maximale. Les trames sont envoyées en début de chaque intervalle de transmission avec une tolérance de gigue prédéterminée. Enfin le réseau AFDX est redondant, le réseau Ethernet sous-jacent étant dupliqué pour des raisons de disponibilité. Les données sont transmises sous forme de paquets IP encapsulés dans des trames Ethernet. A la différence de la commutation Ethernet classique (utilisant l'adresse Ethernet du destinataire), la commutation de trames sur un réseau AFDX utilise un identificateur de lien virtuel inclus dans l'entête de trame. Lorsqu'un commutateur reçoit sur l'un de ses ports d'entrée une trame, il lit l'identificateur de lien virtuel et détermine à partir de sa table de commutation le ou les ports de sortie sur lesquels elle doit être transmise. Les commutateurs vérifient au vol l'intégrité des trames transmises sans toutefois demander une retransmission si une trame est erronée : les trames détectées comme erronées sont éliminées. Les trames transitant sur un lien virtuel sont numérotées en séquence. A la réception, le terminal destinataire vérifie l'intégrité de la séquence des trames.

Chaque lien virtuel est mono-directionnel. Il ne peut être issu que d'un terminal source à la fois mais peut aboutir à plusieurs destinataires. On distingue les liens virtuels en mode point à point (ou unicast), ne desservant qu'un seul destinataire, des liens virtuels en mode multi-point (ou multicast) qui en desservent plusieurs.

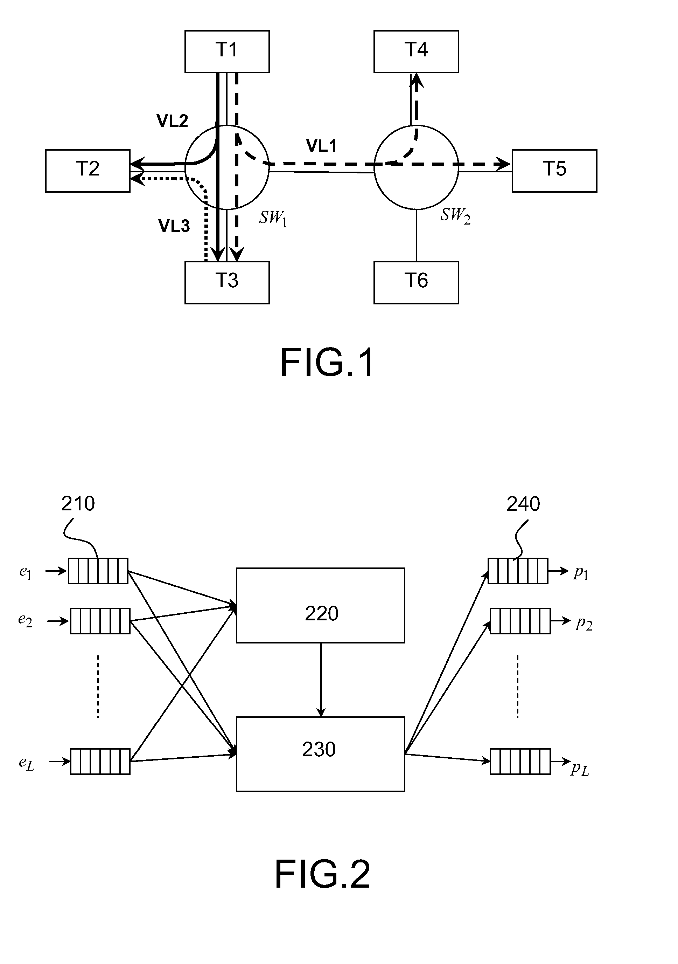

La Fig. 1 représente schématiquement un réseau AFDX comprenant des terminaux $T_1$ à $T_6$ et des commutateurs de trames $SW_1, SW_2$. On voit que le lien virtuel $VL_3$ reliant le terminal $T_3$ à $T_2$ est de type point à point alors que les liens virtuels $VL_2$ desservant $T_2$ et $T_3$, et $VL_1$ desservant $T_3$ à $T_5$ sont de type multipoint.

La Fig. 2 représente schématiquement un commutateur dans un réseau AFDX. Il comprend une pluralité de buffers d'entrée 210 de type FIFO, des moyens de filtrage de trames 220, des moyens de multiplexage 230 et des buffers de sortie 240 de type FIFO. Les trames incidentes sont stockées dans les différents buffers d'entrée, chaque buffer étant relié à un port d'entrée $e_i$. Les moyens de filtrage 220 éliminent les trames correspondant à un lien virtuel non reconnu, les trames erronées et les trames conduisant à une violation des caractéristiques d'un lien. Les moyens de multiplexage 230 aiguillent les trames vers les différents buffers de sortie 240 en fonction des identificateurs de liens virtuels qu'elles contiennent et de la table de commutation. Les buffers de sortie transmettent les trames sur les liaisons physiques, chaque buffer étant relié à un port de sortie $p_i$.

Le routage des liens virtuels dans un réseau AFDX consiste à définir les tables de commutation des différents commutateurs du réseau. Le routage est choisi de manière à respecter les contraintes en bande passante des différents liens. Pour une solution de routage donnée, on vérifie que le réseau est bien déterministe, c'est-à-dire que les temps d'acheminement sur les différents liens sont bien inférieurs aux bornes de latence garanties. Pour ce faire, on utilise généralement un algorithme de calcul dénommé « network calculus » dont on pourra trouver une description dans les articles de René L. Cruz intitulés « A calculus for network delay, Part I : network elements in isolation » et « Calculus for network delay, Part II : network analysis », publiés dans IEEE Transactions on Information Theory, Vol. 37, N° 1, Janvier 1991, pages 114-141. Cet algorithme évalue de manière non probabiliste, pour chaque élément du réseau, le débit maximal instantané de données en sortie de l'élément en question. Le trafic émis par un terminal source sur un lien virtuel $L_i$ est modélisé par une fonction de taux maximal de trafic, dite encore fonction d'enveloppe de flux $R_i(t)$ dépendant de la longueur maximale des trames et de l'intervalle de temps minimum séparant deux trames du lien, soit :

$$R_i(t) = s_{\max} + \frac{s_{\max} \cdot t}{BAG} \qquad\qquad (1)$$

Où $s_{\max}$ est la taille maximale des trames et $BAG$ est une quantité appelée intervalle d'allocation de bande passante du lien, autrement dit $BAG$ est l'intervalle de temps minimum séparant deux trames dudit lien. La quantité de données générée sur le lien pendant l'intervalle de temps $[t_0, t_1]$ s'exprime alors simplement comme $\int_{t_0}^{t_1} R_i(t)dt$ .

Pour chaque élément du réseau, on détermine l'enveloppe de flux en sortie de cet élément à partir de l'enveloppe de flux en entrée et d'une fonction de transfert dudit élément, encore appelée courbe de service. En fonction des enveloppes de flux en entrée et en sortie, on sait borner par valeurs supérieures, la taille de la file d'attente de l'élément (l'arriéré de travail de l'élément) et le retard subi par un paquet traversant cet élément. On calcule ainsi de proche en proche, en partant des terminaux sources et en progressant vers les terminaux destinataires, les enveloppes de flux en chaque point du réseau. Le temps de latence relatif à un lien virtuel est estimé à partir des retards subis dans les éléments traversés par ce lien et, le cas échéant, les temps de propagation entre ces éléments. On vérifie ensuite si les temps de latence estimés sont bien conformes aux valeurs que l'on souhaitait garantir pour les différents liens du réseau.

On trouvera une description de l'application de l'algorithme « network calculus » au calcul des temps de latence dans la thèse de J. Grieu intitulée « Analyse et évaluation de techniques de commutation Ethernet pour l'interconnexion des systèmes avioniques » du 24 septembre 2004.

Le mode de vérification décrit ci-dessus fonctionne bien tant que le réseau ne comporte pas de boucle physique. *A contrario,* si une telle boucle est présente dans le réseau, les temps de latence des liens empruntant la boucle ne peuvent être déterminés.

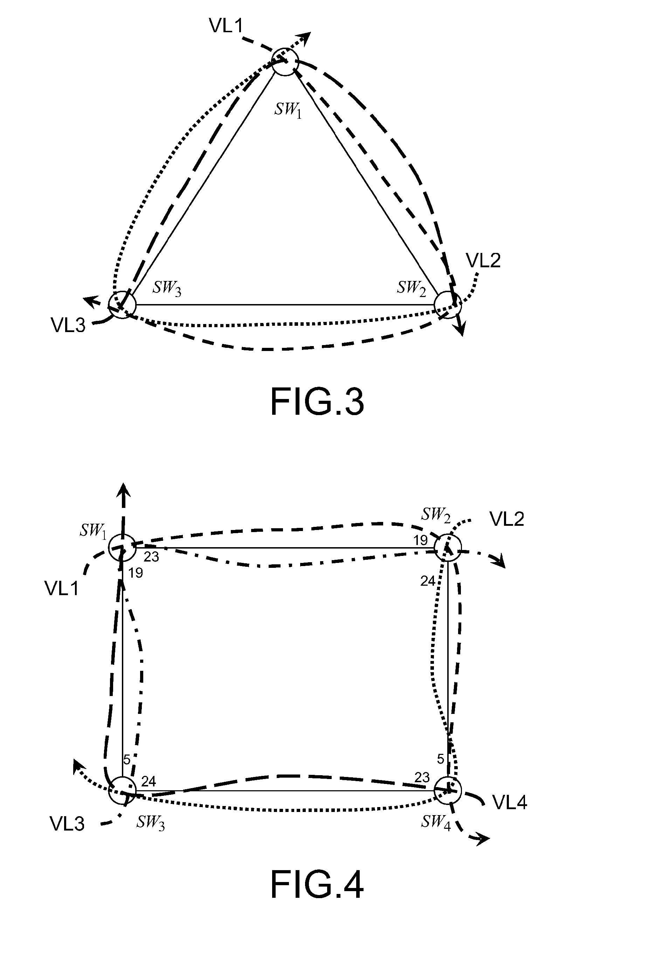

La Fig. 3 illustre la situation d'un réseau AFDX comprenant une boucle à trois commutateurs : $SW_1$, $SW_2$, $SW_3$. Chaque commutateur possède trois ports physiques, chaque port étant constitué d'un port d'entrée et d'un port de sortie. Le port de sortie $p_1$ du commutateur $SW_1$ est connecté au port d'entrée $e_3$ du commutateur $SW_3$. Le port de sortie $p_3$ du commutateur $SW_3$ est connecté au port d'entrée $e_2$ du commutateur $SW_2$. Le port de sortie $p_2$ du commutateur $SW_2$ est connecté au port d'entrée $e_1$ du commutateur $SW_1$. Le chemin C passant par les ports $p_1, e_3, p_3, e_2, p_2, e_1$ forme une boucle orientée au sein du réseau. L'enveloppe de flux sur le port de sortie $p_1$ dépend de l'enveloppe de flux en $e_1$, c'est-à-dire de $p_2$, et de celle du lien VL$_1$ (à l'entrée de $SW_1$). De manière similaire, l'enveloppe de flux en $p_2$ dépend à son tour de l'enveloppe de flux en $p_3$ et de celle du lien VL$_3$. Enfin l'enveloppe de flux en $p_3$ dépend à son tour de l'enveloppe de flux en $p_1$ et de celle du lien VL$_2$. On constate que l'on a une relation de dépendance circulaire qui rend impossible l'estimation des enveloppes de flux et donc des temps de latence.

La Fig. 4 illustre la situation d'un réseau AFDX comprenant une boucle à quatre commutateurs : $SW_1, SW_2, SW_3, SW_4$. Chaque commutateur possède quatre ports physiques, chaque port étant constitué d'un port d'entrée et d'un port de sortie. On remarque que quatre liens virtuels VL$_1$ à VL$_4$ ont été routés dans le réseau.

L'enveloppe de flux du port de sortie 23 de $SW_1$ dépend de l'enveloppe de flux du port de sortie 5 de $SW_3$ et de celle du lien VL$_1$. L'enveloppe de flux du port de sortie 5 de $SW_3$ dépend de l'enveloppe de flux du port de sortie 23 de $SW_4$ et de celle du lien VL$_3$. L'enveloppe de flux du port de sortie 23 de $SW_4$ dépend de l'enveloppe de flux du port de sortie 24 de $SW_2$ et de celle du lien VL$_4$. Enfin, l'enveloppe de flux du port de sortie 24 de $SW_2$ dépend de l'enveloppe de flux du port de sortie 23 de $SW_1$ et de celle de $VL_2$.

Là encore, la relation de dépendance circulaire ne permet pas d'estimer les enveloppes de flux et donc les temps de latence.

Afin d'éviter les dépendances circulaires, il est connu de modifier la topologie du réseau, par exemple de rajouter une liaison physique entre commutateurs non reliés de la boucle voire de rajouter un commutateur central relié à plusieurs ou tous les commutateurs de la boucle. Dans les deux cas, la modification de topologie augmente localement le nombre de chemins possibles de routage des liens virtuels, de sorte qu'il est possible de modifier le routage initial et de casser la dépendance circulaire. Toutefois, il n'est pas certain que l'on ne crée pas ainsi de nouvelles boucles ou que le routage d'un nouveau lien n'entraînera pas une nouvelle dépendance circulaire. On serait alors revenu au cas précédent et l'incapacité de vérifier le déterminisme du réseau conduirait à une nouvelle complexification de la topologie du réseau.

L'objet de la présente invention est de proposer un procédé de routage de liens virtuels dans un réseau à commutation de trames qui permette une vérification certaine du déterminisme du réseau, sans modification de sa topologie.

## EXPOSÉ DE L'INVENTION

La présente invention est définie par un procédé de routage de liens virtuels dans un réseau à commutation de trames comprenant une pluralité de terminaux sources et/ou destinataires desdites trames, des commutateurs de trames étant reliés entre eux par des liaisons physiques, chaque lien virtuel étant défini, pour un type point à point, par un chemin à travers ledit réseau entre un terminal source et un terminal destinataire et, pour un type multipoint, par une pluralité de chemins à travers ledit réseau entre un terminal source d'une part et une pluralité de terminaux destinataires, d'autre part. Le procédé comprend les étapes suivantes :

(a) recherche des boucles orientées dans le réseau, à une permutation circulaire près des commutateurs qu'elles contiennent ;
(b) sélection d'un triplet de commutateurs consécutifs au sein de chaque boucle orientée, chaque triplet définissant un chemin de routage interdit ;
(c) détermination d'une solution de routage des liens virtuels n'empruntant pas lesdits chemins interdits ;
(d) vérification du déterminisme du réseau sur la base des liens virtuels ainsi routés.

Si le déterminisme du réseau est vérifié, on peut alors stocker dans les commutateurs les tables de commutation correspondant à ladite solution de routage.

La vérification du déterminisme du réseau comprend avantageusement le calcul des enveloppes de flux en sortie des commutateurs traversés par les liens virtuels et des temps de latence relatifs à ces liens, les temps de latence ainsi obtenus étant ensuite comparés à des bornes de latence de consigne.

Selon un mode de réalisation avantageux, on sélectionne à l'étape (b) des triplets communs au plus grand nombre possible de boucles orientées.

On pourra également sélectionner en priorité à l'étape (b) des triplets appartenant à des chemins de routage interdits par une contrainte topologique. Cette contrainte topologique peut consister pour un réseau partitionné en zones distinctes alimentées par des alimentations indépendantes, à interdire :

- tout chemin de routage franchissant une frontière entre deux zones, lorsque les commutateurs respectivement reliés au terminal source et au terminal destinataire du lien virtuel appartiennent à la même zone ;
- tout chemin de routage franchissant plus d'une fois une frontière entre deux zones, lorsque les commutateurs respectivement reliés au terminal source et au terminal destinataire du lien virtuel appartiennent à des zones différentes.

Dans une application préférée, le réseau de commutation de trames est un réseau AFDX.

Enfin, l'invention concerne en outre un programme d'ordinateur comprenant des moyens logiciels adaptés à mettre en oeuvre les étapes du procédé ci-dessus, lorsqu'il est exécuté par un ordinateur.

## BRÈVE DESCRIPTION DES DESSINS

La Fig. 1 représente schématiquement un exemple de réseau AFDX ;
la Fig. 2 représente schématiquement la structure d'un commutateur dans un réseau AFDX ;

la Fig. 3 illustre la situation d'un réseau AFDX comprenant une boucle à trois commutateurs ;
la Fig. 4 illustre la situation d'un réseau AFDX comprenant une boucle à quatre commutateurs ;
les Figs. 5A et 5B illustrent le principe de fonctionnement de l'invention ;
la Fig. 6 représente un organigramme de la méthode de routage selon l'invention ;
la Fig. 7 illustre un exemple simplifié de réseau AFDX pour l'application de la méthode de routage selon l'invention.

## EXPOSÉ DÉTAILLÉ DE MODES DE RÉALISATION PARTICULIERS

L'idée à la base de l'invention est d'effectuer le routage d'un lien virtuel en sélectionnant parmi les chemins possibles, ceux qui obéissent à une contrainte de ségrégation spécifique avec des parties de boucles orientées du réseau.

On appellera par la suite boucle orientée toute séquence ordonnée $\ell$ de noeuds ou de commutateurs du réseau $\ell = SW_1, SW_2, .., SW_N$ avec $N \geq 3$ telle que $SW_{i+1} \in G(SW_i)$ pour $i = 1,..,N\text{-}1$ et $SW_1 \in G(SW_N)$ où $G$ est une application qui fait correspondre à chaque commutateur $SW$ l'ensemble de ses successeurs, c'est-à-dire l'ensemble des commutateurs directement reliés à un port de sortie de $SW$. Dans un réseau full-duplex où chaque port physique comprend un port d'entrée et un port de sortie, on comprendra que s'il existe une boucle orientée $SW_1, SW_2, .., SW_N$ dans le réseau alors $SW_N, SW_{N\text{-}1}, ..., SW_1$ est également une boucle orientée mais de sens contraire.

Avant d'effectuer au routage des liens virtuels, le procédé selon l'invention recense les boucles orientées du réseau. Pour ce faire, on peut représenter le réseau sous forme d'un graphe orienté dont les sommets sont les commutateurs et les terminaux et les liaisons port de sortie à port d'entrée sont les arcs. La recherche des boucles orientées dans le réseau revient à une recherche de circuits dans le graphe. A cette fin, on labellise chaque sommet du graphe au moyen d'une étiquette. Chaque sommet transmet à ses successeurs son étiquette, puis chacun de ces successeurs concatène l'étiquette qu'il a reçue avec son étiquette propre et transmet les étiquettes ainsi concaténées à ses propres successeurs. On poursuit la propagation des étiquettes de proche en proche. Lorsqu'un sommet reçoit une liste d'étiquettes comprenant la sienne, un circuit est identifié et la propagation de cette liste est arrêtée. On groupe ensuite les circuits par classes d'équivalence : les circuits/boucles orientées d'une même classe sont identiques à une permutation circulaire près. On choisit arbitrairement une boucle orientée par classe d'équivalence pour la représenter.

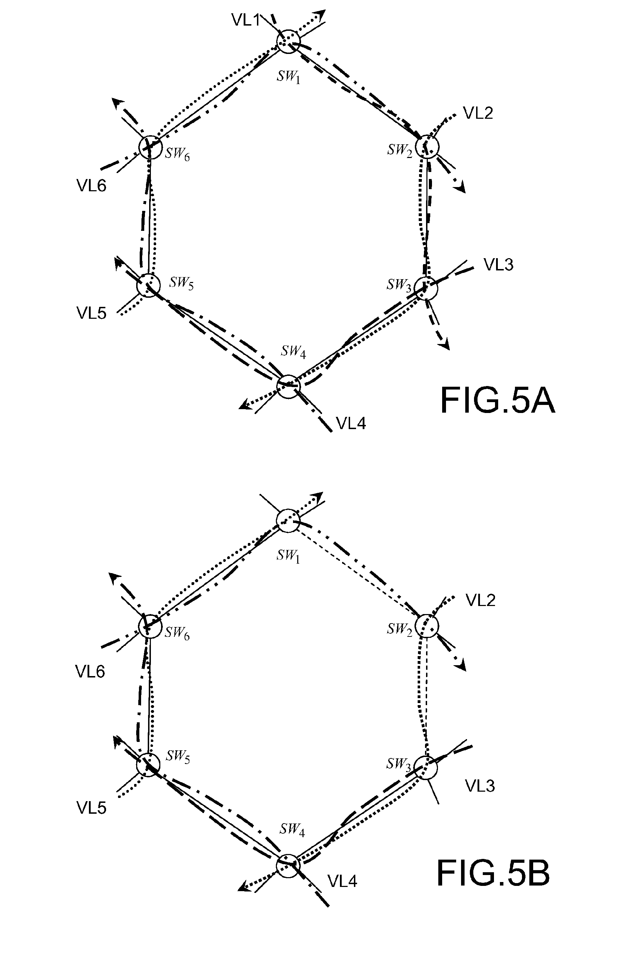

Les boucles orientées étant identifiées, on les trie par nombre de commutateurs traversés. Considérons une telle boucle orientée, représentée en Fig. 5A. Elle correspond ici à une boucle physique de six commutateurs $SW_1$ à $SW_6$. Un lien virtuel VL qui pénètre dans la boucle en un commutateur $SW_i$ et ressort au commutateur suivant $SW_{i+1}$ n'est pas susceptible d'induire une relation de dépendance circulaire dans la boucle, quels que soient le nombre de liens virtuels déjà routés sur la boucle et le nombre de commutateurs que ces derniers partagent avec elle. En effet, le lien VL en question ne traversant pas deux ports de sortie de commutateurs consécutifs, il n'induit pas de relation entre les enveloppes de flux en sortie de ces commutateurs.

On comprend ainsi que l'on ne peut induire de dépendance circulaire que lorsqu'un lien virtuel partage au moins trois commutateurs successifs, soit au moins deux ports de sortie communs, avec la boucle orientée. Si l'on considère les liens virtuels partageant exactement trois commutateurs avec la boucle orientée de la Fig. 5A, on remarque qu'il faut au minimum six de ces liens $VL_1,...,VL_6$ pour obtenir un recouvrement de la boucle et par conséquent une dépendance circulaire. De manière générale pour une boucle orientée de $N$ commutateurs, on pourra obtenir une dépendance avec au minimum $N$ liens ayant exactement trois commutateurs communs avec la boucle, a *fortiori* pour $N$ liens présentant plus de trois commutateurs communs avec la boucle. Pour des liens partageant exactement $M > 2$

commutateurs avec la boucle orientée, il faudra au minimum $E(\dfrac{N}{M-2})$ de tels liens pour obtenir une relation de dépendance circulaire, où $E(.)$ exprime la valeur entière.

Supposons maintenant que pour une boucle orientée donnée, on supprime un chemin de routage correspondant à trois sommets successifs de la boucle. La situation a été illustrée en Fig. 5B où le chemin $SW_1, SW_2, SW_3$, représenté en trait discontinu, est interdit au routage. Grâce à cette contrainte, il n'est plus possible d'obtenir un recouvrement de la boucle avec des liens virtuels entraînant une dépendance circulaire. En effet, le lien virtuel $VL_1$ n'est plus autorisé et tout lien virtuel obéissant à la contrainte prescrite contient tout au plus le chemin $SW_1, SW_2$ ou le chemin $SW_2, SW_3$. Aucun des liens virtuels et en particulier ni $VL_6$ et $VL_2$, ne permet d'induire une relation entre les enveloppes de flux des commutateurs $SW_1$ et $SW_3$.

On voit qu'en interdisant tout chemin de routage passant par trois commutateurs successifs donnés de la boucle orientée, on élimine tout risque de dépendance circulaire. En outre, le nombre de possibilités de routage de liens virtuels est relativement peu affecté par cette interdiction (réduction d'au maximum un tiers, pour une boucle à trois commutateurs).

On procède de la manière décrite ci-dessus pour chaque boucle orientée. Avantageusement, on interdit des chemins de routage communs à plusieurs boucles de manière à en réduire le nombre.

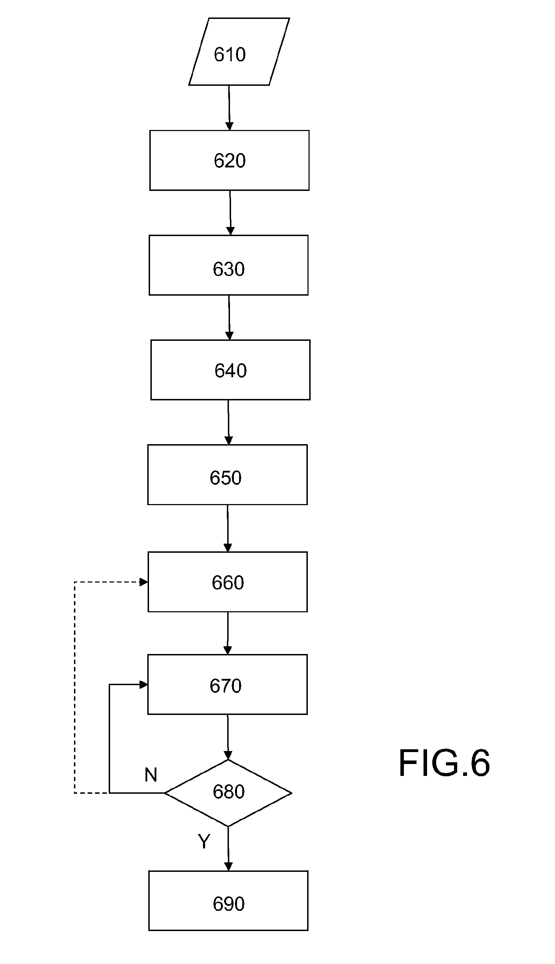

La Fig. 6 illustre l'organigramme de la méthode de routage selon l'invention. A partir de la description de la topologie du réseau 610, on recense en 620 toutes les boucles orientées du réseau, à une permutation circulaire près. En 630, on les trie par nombre de commutateurs traversés. Pour chaque boucle orientée ainsi obtenue, on identifie ensuite en 640, tous les triplets de commutateurs consécutifs de la boucle. En 650, on recherche les triplets communs à plusieurs boucles. A l'étape 660, on sélectionne un triplet par boucle. Avantageusement, on le sélectionnera en prenant par ordre de préférence, les triplets qui sont partagés par le plus grand nombre possible de boucles. Les triplets sélectionnés définissent des chemins de routage interdits, l'interdiction de routage par un chemin permettant de rompre la relation de dépendance circulaire pour la boucle ou les boucles auquel il appartient.

En 670, on détermine une solution de routage des liens virtuels en respectant les contraintes établies en 660.

A l'étape 680 on vérifie, pour la solution de routage trouvée en 670, si le réseau est bien déterministe en estimant les enveloppes de flux en sortie des commutateurs traversés par les liens, puis les temps de latence pour les différents liens. On compare ensuite les temps de latence obtenus aux bornes de latence de consigne pour lesdits liens.

Si le déterminisme est bien vérifié, les tables de commutation correspondant à la solution de routage sont établies et stockées dans les commutateurs. Si le déterminisme n'est pas vérifié, on essaie une nouvelle solution de routage en 670 ou, à défaut, une nouvelle sélection de chemins de routage interdits en 660, comme indiqué en trait discontinu.

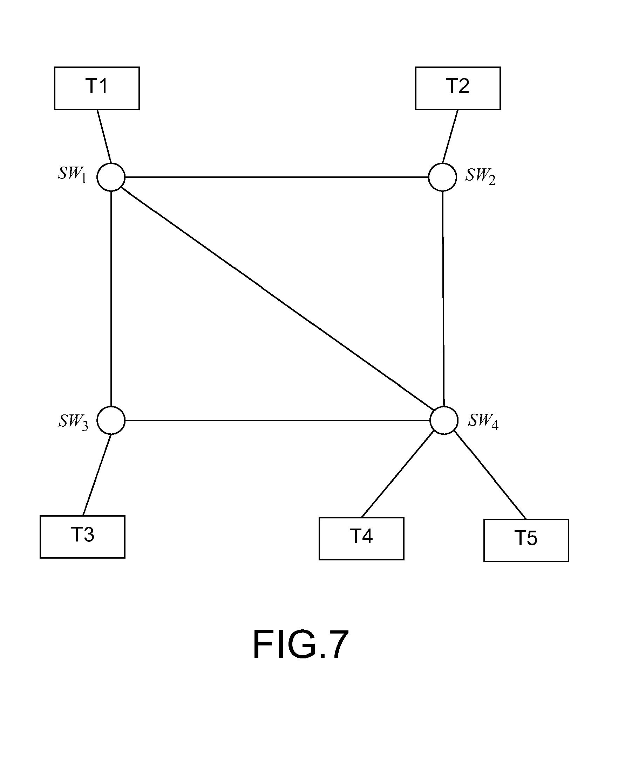

La Fig. 7 représente un exemple simplifié de réseau AFDX permettant d'illustrer la méthode de routage selon l'invention.

Le réseau comprend cinq terminaux $T_1$ à $T_5$ pouvant être chacun source ou destinataire, et quatre commutateurs $SW_1$ à $SW_4$. Les boucles orientées du réseau sont identifiées à une permutation circulaire près :

- pour les boucles à 3 commutateurs :

$$\ell_1^{cw} = SW_1, SW_2, SW_4 \quad ; \quad \ell_1^{ccw} = SW_4, SW_2, SW_1 \quad ;$$
$$\ell_2^{cw} = SW_1, SW_4, SW_3 \quad ; \quad \ell_2^{ccw} = SW_3, SW_4, SW_1 \quad ;$$

- pour les boucles à 4 commutateurs : $\ell_3^{cw} = SW_1, SW_2, SW_4, SW_3 \quad ; \quad \ell_3^{ccw} = SW_3, SW_4, SW_2, SW_1 \quad ;$

Pour chacune des boucles, on liste les triplets candidats pour les chemins de routage interdits :

boucle $\ell_1^{cw}$ : $\{SW_1, SW_2, SW_4\}; \{SW_2, SW_4, SW_1\}; \{SW_4, SW_1, SW_2\}$

boucle $\ell_1^{ccw}$ : $\{SW_4, SW_2, SW_1\}; \{SW_2, SW_1, SW_4\}; \{SW_1, SW_4, SW_2\}$

boucle $\ell_2^{cw}$ : $\{SW_1, SW_4, SW_3\}; \{SW_4, SW_3, SW_1\}; \{SW_3, SW_1; SW_4\}$

boucle $\ell_2^{ccw}$ : $\{SW_3, SW_4, SW_1\}; \{SW_4, SW_1, SW_3\}; \{SW_1, SW_3, SW_4\}$

boucle $\ell_3^{cw}$ :

{SW₁,SW₂,SW₄};{SW₂,SW₄,SW₃};{SW₄,SW₃,SW₁};{SW₃,SW₁,SW₂}

boucle $\ell_3^{ccw}$ :

{SW₃,SW₄,SW₂};{SW₄,SW₂,SW₁};[SW₂,SW₁,SW₃};{SW₁,SW₃,SW₄}

Pour supprimer tout risque de dépendance circulaire, il suffit de choisir un triplet par boucle et d'interdire le routage à travers les chemins correspondants. Avantageusement, comme déjà mentionné, on choisit des triplets communs au plus grand nombre de boucles possibles, afin de réduire le nombre de chemins interdits. Dans le cas présent, on sélectionnera par exemple :

{SW₁,SW₂,SW₄}, commun à $\ell_1^{cw}$ et $\ell_3^{cw}$ ;

{SW₄,SW₂,SW₁}, commun à $\ell_1^{ccw}$ et $\ell_3^{ccw}$ ;

{SW₁,SW₄,SW₃} pour $\ell_2^{cw}$ et {SW₃,SW₄,SW₁} pour $\ell_2^{ccw}$ .

Ainsi, l'on interdira seulement 4 chemins au lieu des 6 théoriquement nécessaires.

En pratique, la contrainte de routage imposée, la vérification du déterminisme du réseau n'est pas la seule contrainte à prendre en considération pour le routage des liens virtuels. Par exemple, dans une application avionique, il est connu de partitionner le réseau en zones distinctes, alimentées par des sources d'alimentation indépendantes.

Pour des raisons de sécurité, on fixe alors une contrainte topologique, ci-après dénommée contrainte de partition, consistant à interdire :

- tout chemin de routage franchissant une frontière entre zones, si les commutateurs reliés respectivement au terminal source et au terminal destinataire appartiennent à la même zone ;
- tout chemin de routage franchissant plus d'une fois une frontière entre zones, si les commutateurs reliés respectivement au terminal source et au terminal destinataire appartiennent à des zones distinctes adjacentes.

On recense dans un premier temps l'ensemble S des chemins de routage interdits au sens de la contrainte de partition. Pour un lien virtuel donné à router, le respect de cette contrainte équivaut à une ségrégation du lien vis-à-vis des chemins de *S*.

De manière générale, selon un mode de réalisation de l'invention, on disposera d'un ensemble *S* de chemins interdits, préalablement à l'application de la contrainte de routage associée à la vérification du déterminisme du réseau. Lors du choix du triplet de commutateur par boucle orientée, on sélectionnera avantageusement un triplet appartenant à un chemin déjà interdit de l'ensemble *S*. Bien entendu, si plusieurs triplets de la boucle appartiennent à *S*, on choisira par priorité celui qui est commun au plus grand nombre possible de boucles orientées. Ainsi, on augmentera relativement peu le nombre de chemins à exclure pour la vérification du déterminisme.

## Revendications

1. Procédé de routage de liens virtuels dans un réseau à commutation de trames comprenant une pluralité de terminaux sources et/ou destinataires desdites trames, des commutateurs de trames étant reliés entre eux par des liaisons physiques, chaque lien virtuel étant défini, pour un type point à point, par un chemin à travers ledit réseau entre un terminal source et un terminal destinataire et, pour un type multipoint, par une pluralité de chemins à travers ledit réseau entre un terminal source d'une part et une pluralité de terminaux destinataires, d'autre part, ledit procédé étant **caractérisé en ce qu'**il comprend les étapes suivantes :

   (a) recherche de boucles orientées dans le réseau, à une permutation circulaire près, des commutateurs qu'elles contiennent ;
   (b) sélection d'un triplet de commutateurs consécutifs au sein de chaque boucle orientée, chaque triplet définissant un chemin de routage interdit ;
   (c) détermination d'une solution de routage des liens virtuels n'empruntant pas lesdits chemins interdits ;
   (d) vérification du déterminisme du réseau sur la base des liens virtuels ainsi routés.

2. Procédé de routage selon la revendication 1, **caractérisé en ce que**, si le déterminisme du réseau est vérifié, on stocke dans les commutateurs les tables de commutation correspondant à ladite solution de routage.

3. Procédé de routage selon la revendication 1 ou 2, **caractérisé en ce que** la vérification du déterminisme du réseau comprend le calcul des enveloppes de flux en sortie des commutateurs traversés par les liens virtuels et des temps de latence relatifs à ces liens, les temps de latence ainsi obtenus étant ensuite comparés à des bornes de latence de consigne.

4. Procédé de routage selon l'une des revendications précédentes, **caractérisé en ce qu'**on sélectionne à l'étape (b) des triplets communs au plus grand nombre possible de boucles orientées.

5. Procédé de routage selon l'une des revendications précédentes, **caractérisé en ce qu'**on sélectionne en priorité à l'étape (b) des triplets appartenant à des chemins de routage interdits par une contrainte topologique.

6. Procédé de routage selon la revendication 5, **caractérisé en ce que** ladite contrainte topologique consiste pour un réseau partitionné en zones distinctes alimentées par des alimentations indépendantes, à interdire :

   - tout chemin de routage franchissant une frontière entre deux zones, lorsque les commutateurs respectivement reliés au terminal source et au terminal destinataire du lien virtuel appartiennent à la même zone ;
   - tout chemin de routage franchissant plus d'une fois une frontière entre deux zones, lorsque les commutateurs respectivement reliés au terminal source et au terminal destinataire du lien virtuel appartiennent à des zones différentes.

**7.** Procédé de routage selon l'une des revendications précédentes, **caractérisé en ce que** le réseau de commutation de trames est un réseau AFDX.

**8.** Programme d'ordinateur comprenant des moyens logiciels adaptés à mettre en oeuvre les étapes du procédé selon l'une des revendications précédentes, lorsqu'il est exécuté par un ordinateur.

**Patentansprüche**

**1.** Verfahren zum Routen virtueller Links in einem Netzwerk mit Rahmenvermittlung, das eine Vielzahl von Quellen- und/oder Zielendgeräten der Rahmen enthält, wobei Rahmen-Vermittlungseinrichtungen über physikalische Verbindungen miteinander verbunden sind, wobei jeder virtuelle Link für einen Punkt-zu-Punkt-Typ durch einen Pfad durch das Netzwerk zwischen einem Quellenendgerät und einem Zielendgerät, und für einen Mehrpunkt-Typ durch eine Vielzahl von Pfaden durch das Netzwerk zwischen einem Quellenendgerät einerseits und einer Vielzahl von Zielendgeräten andererseits definiert ist, wobei das Verfahren **dadurch gekennzeichnet ist, dass** es die folgenden Schritte enthält:

(a) Suche nach gerichteten Schleifen im Netzwerk, abgesehen von einer zirkularen Permutation, der Vermittlungseinrichtungen, die sie enthalten;
(b) Auswahl eines Triplets aufeinanderfolgender Vermittlungseinrichtungen innerhalb jeder gerichteten Schleife, wobei jedes Triplet einen verbotenen Routingpfad definiert;
(c) Festlegen einer Routing-Lösung der virtuellen Links, die nicht über die verbotenen Pfade geht;
(d) Verifizierung des Determinismus des Netzwerks auf der Basis der so gerouteten virtuellen Links.

**2.** Routing-Verfahren nach Anspruch 1, **dadurch gekennzeichnet, dass**, falls der Determinismus des Netzwerks verifiziert wird, die Vermittlungstabellen entsprechend der Routinglösung in den Vermittlungseinrichtungen gespeichert werden.

**3.** Routing-Verfahren nach Anspruch 1 oder 2, **dadurch gekennzeichnet, dass** die Verifizierung des Determinismus des Netzwerks die Berechnung der Fluss-Umhüllenden am Ausgang der von den virtuellen Links durchquerten Vermittlungseinrichtungen und der Latenzzeiten bezüglich dieser Links enthält, wobei die so erhaltenen Latenzzeiten anschließend mit Solllatenzgrenzen verglichen werden.

**4.** Routing-Verfahren nach einem der vorhergehenden Ansprüche, **dadurch gekennzeichnet, dass** im Schritt (b) Triplets ausgewählt werden, die der größtmöglichen Anzahl von gerichteten Schleifen gemeinsam sind.

**5.** Routing-Verfahren nach einem der vorhergehenden Ansprüche, **dadurch gekennzeichnet, dass** im Schritt (b) prioritär Triplets ausgewählt werden, die zu durch eine topologische Einschränkung verbotenen Routingpfaden gehören.

**6.** Routing-Verfahren nach Anspruch 5, **dadurch gekennzeichnet, dass** die topologische Einschränkung für ein in von unabhängigen Versorgungen versorgte getrennte Bereiche aufgeteiltes Netzwerk darin besteht, zu verbieten:

- jeden Routingpfad, der eine Grenze zwischen zwei Zonen überschreitet, wenn die mit dem Quellenendgerät bzw. dem Zielendgerät des virtuellen Links verbundenen Vermittlungseinrichtungen zur gleichen Zone gehören;
- jeden Routingpfad, der mehr als einmal eine Grenze zwischen zwei Zonen überschreitet, wenn die mit dem Quellenendgerät bzw. dem Zielendgerät des virtuellen Links verbundenen Vermittlungseinrichtungen zu unterschiedlichen Zonen gehören.

**7.** Routing-Verfahren nach einem der vorhergehenden Ansprüche, **dadurch gekennzeichnet, dass** das Netzwerk zur Rahmenvermittlung ein AFDX-Netzwerk ist.

**8.** Computerprogramm, das Software-Einrichtungen enthält, die die Schritte des Routing-Verfahrens nach einem der vorhergehenden Ansprüche durchführen können, wenn es von einem Computer ausgeführt wird.

**Claims**

1. A method for routing virtual links in a frame switching network comprising a plurality of source terminals and/or destination of said frames, frame switches being connected together through physical connections, each virtual link being defined for a point-to-point type, by a path through said network between a source terminal and a destination terminal and, for a multipoint type, by a plurality of paths through said network between a source terminal on the one hand and a plurality of destination terminals on the other hand, said method being **characterized in that** it comprises the following steps:

   (a) searching for oriented loops in the network, to within a circular permutation of the switches will they contain;
   (b) selecting a triplet of consecutive switches within each oriented loop, each triplet defining a forbidden routing path;
   (c) determining a routing solution for the virtual links not following said forbidden paths;
   (d) verifying the determinism of the network on the basis of the thus routed virtual links.

2. The routing method according to claim 1, **characterized in that**, if the determinism of the network is confirmed, the switching tables corresponding to said routing solution are stored in the switches.

3. The routing method according to claim 1 or 2, **characterized in that** the verification of the determinism of the network comprises the computation of the flow envelopes at the output of the switches crossed by the virtual links and of the latency times relative to these links, the thus obtained latency times being then compared with set latency limits.

4. The routing method according to any of the preceding claims, **characterized in that** triplets common to the largest number of oriented loops as possible are selected in step (b).

5. The routing method according to any of the preceding claims, **characterized in that** triplets belonging to routing paths forbidden by a topological constraint are selected with priority.

6. The routing method according to claim 5, **characterized in that** said topological constraint for a network partitioned into distinct areas powered by independent power supplies, consists of forbidding:

   - any routing path crossing a boundary between two areas, when the switches respectively connected to the source terminal and to the destination terminal of the virtual links belong to the same area;
   - any routing path crossing more than once a boundary between areas, when the switches respectively connected to the source terminal and to the destination terminal of the virtual link belong to different areas.

7. The routing method according to any of the preceding claims, **characterized in that** the frame switching network is an AFDX network.

8. A computer program comprising software means adapted to perform the steps of the method according to any of the preceding claims, when it is run on a computer.

# FIG.1

# FIG.2

FIG.3

FIG.4

FIG.5A

FIG.5B

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20037043756 A

- FR 2832011 A

**Littérature non-brevet citée dans la description**

- **DE RENÉ L. CRUZ INTITULÉS.** « A calculus for network delay, Part I : network elements in isolation » et « Calculus for network delay, Part II : network analysis ». *IEEE Transactions on Information Theory,* vol. 37 (1), 114-141

- **DE J. GRIEU.** *Analyse et évaluation de techniques de commutation Ethernet pour l'interconnexion des systèmes avioniques,* 24 Septembre 2004